# EUROPEAN PATENT APPLICATION

(11) **EP 3 113 498 A1**
(43) Date of publication of application: **04.01.2017**
(21) Application number: 15197507.5
(22) Date of filing: 02.12.2015
(51) Int. Cl.: H04N 21/43, H04N 21/8547

(54) **SYNCHRONIZED RENDERING OF SPLIT MULTIMEDIA CONTENT ON NETWORK CLIENTS**

(30) Priority: 30.06.2015 US 201514788289
(71) Applicant: STMicroelectronics International N.V., 1118 BH Amsterdam (NL)
(72) Inventor: JAIRATH, Gaurav, 110051 Delhi (IN); SRIVASTAVA, AmitKumar, 201308 UP (IN); PANDEY, Deepak, 226006 Uttar Pradesh (IN)
(74) Representative: Smith, Gary John

(57) **Abstract**

A system is disclosed for rendering a split multimedia content stream associated with a single program among networked playback devices in sync with each other. Splitting multimedia content allows, for example, two viewers of the same movie to hear the audio track in different languages, or presentation of related program information on a second screen. A presentation method disclosed ensures that the same program can be played in full or in part on multiple devices while maintaining audio and video synchronization among the devices. In one embodiment, synchronization is achieved by monitoring network latency and client system latency, and then incorporating latency information into a program clock reference (PCR) signal for transmission to a secondary playback device.

## Description

### BACKGROUND

### Technical Field

The present disclosure generally relates to multimedia presentation, and in particular, to managing synchronous presentation of a plurality of multimedia streams on multiple client devices.

### Description of the Related Art

For about half a century, multimedia news and entertainment consisted of receiving a broadcast signal for display on a television. Gradually, additional providers of entertainment and news feeds for the multimedia signal emerged, such as cable providers, satellite providers, and then Internet providers. Such multimedia signals were received by a set top box including a tuner/demodulator, a de-multiplexer for decoding the signal, and a display output port. Thus, while the sources of the news and entertainment content branched out, the destination for the content was still a television, or perhaps multiple televisions. In recent years, however, alternative display devices have become equipped with hardware and software capable of receiving the multimedia signals previously intended to be shown on TVs. These destination devices include interactive game consoles, computers, laptops, tablets, and mobile devices such as, for example, smart phones. Now, all of these devices are used as media players to render audiovisual content from television program distributors and providers of Internet connectivity. Furthermore, many of these media players are mobile, and receive multimedia content within a wireless client-server network environment.

### BRIEF SUMMARY

According to a first aspect there is provided a multimedia system, comprising: a media server communicatively coupled to a network and to a plurality of client media players, the media server configured to demodulate and decode multimedia signals received via the network, for output to the plurality of client media players; a primary media player configured to receive from the media server a program including video data for rendering on a display device and a set of audio data for rendering to a first speaker; a secondary media player configured to receive from the media server a set of audio data for rendering to a second speaker; and a memory storing instructions that, when executed by a microprocessor, cause the media server to split a multimedia signal associated with the program into separate video and audio streams; transmit a video stream and an audio stream to the primary media player; transmit an audio stream to the secondary media player; coordinate substantially simultaneous display of the video and audio streams associated with a same program on the different media players; and coordinate substantially simultaneous display different sets of audio data associated with the same program on the first and second speakers. The client media players may include one or more of a television, a game console, a DVR, a computer, a laptop, a tablet, or a smart phone. The media server may be an enhanced broadcast media set top box. The secondary media player may be further configured to receive a video stream for rendering on a second display, and the instructions further cause the media server to synchronize rendering of the video stream on the second display with a program clock signal. One of the audio streams may be a translation of another audio stream into a different language. A video stream may be augmented with one or more of explanatory text, subtitles, annotations, graphics, and superimposed images. The media server may include a primary system configured to perform latency adjustments. The media server may further include an extended system configured with a program clock reference generator and a transport stream multiplexer.

According to a further aspect there is provided a method of coordinating, by a media server, substantially simultaneous display of video and audio streams associated with a multimedia program on different media players, the method comprising: determining a network latency for primary and secondary client devices networked to the media server; streaming video frame data to the client devices; determining a client system latency based on presentation time stamps associated with rendering video frames on the client devices; adjusting the program clock reference value for the secondary client devices to account for the network latency and the client system latency; and transmitting the adjusted program clock reference value to a secondary client device to synchronize data presentation with that of the primary client device.

The method may further comprise, upon rendering the video and audio streams at the different client devices, receiving from each client device a presentation time stamp.

According to a third aspect there is provided a method of streaming multimedia content from a media server to different media players, the method comprising: receiving, via a network, multimedia signals associated with a single multimedia program; splitting the multimedia signals into separate video and audio streams; transmitting a video stream and an audio stream to a primary media player having a display and a speaker; transmitting an audio stream to a secondary media player having a display and a speaker; and coordinating substantially simultaneous display of different audio streams associated with the single multimedia program on the different media players using a digital program clock as a common reference.

The method may further comprise transmitting a video stream to the secondary media player and synchronizing rendering of the video stream to the rendering of another video stream using a digital program clock as a common reference.

Rendering the audio stream by the secondary media player may provide, via the second speaker, a soundtrack of the program in a language different from that rendered on the primary media player.

The primary media player may be a television, the secondary media player is a smart phone, and the second speaker is a headset.

Display of the second video stream by the second media player may provide enhanced video content relating to the same program displayed by the primary media player.

Splitting may include demodulating and encoding the media signals.

Decoding may include transcoding to provide video streams at different resolutions.

According to a fourth aspect there is provided a server-implemented method, comprising: streaming media data to primary and secondary client devices; determining network and client system latencies after passage of a stabilization time interval; calculating a modified program clock reference value from an original program clock reference value based on the latencies, when the latencies exceed a threshold latency value; and transmitting the modified program clock reference value to the secondary client device.

The modified program clock reference value may be set to the sum of the network latency, the client system latency, and the original program clock reference value.

A system is disclosed in embodiments for splitting a multimedia content stream associated with a single program for synchronized rendering among multiple destination devices. Splitting multimedia content may be desirable, for example, when two viewers of the same movie wish to hear the audio track in different languages. In such a case, a media server processes the multimedia stream for a single program to provide video data and audio data associated with the program for substantially simultaneous presentation on different media players. For example, the media server may provide video for display on a television screen, while an English language audio track is presented via the television sound system. Meanwhile, a French language audio track may be split from the multimedia stream and presented at the same time on a separate device, e.g., a smart phone, so that a second user can listen through headphones to the movie soundtrack in French while watching the video on the TV. Furthermore, video information may be split among two or more devices so that while a movie is being displayed on a television screen, a version of the video containing sub-titles is also being shown in synchronized fashion on a tablet computer. In another scenario, a documentary film may be provided as a pair of video streams, wherein one stream includes only images, and another stream includes supplemental information such as historical facts superimposed on the images. Alternatively, a sports event may be presented along with a second video stream that includes player information, game statistics, play-by-play annotations, and the like.

### BRIEF DESCRIPTION OF THE SEVERAL VIEWS OF THE DRAWINGS

In the drawings, identical reference numbers identify similar elements. The sizes and relative positions of elements in the drawings are not necessarily drawn to scale.
Figure 1 is a block diagram showing components of a home multimedia entertainment system, according to one embodiment described herein.
Figure 2 is a layout showing components of the home multimedia entertainment system shown in Figure 1 arranged in a wireless network configuration, according to an embodiment described herein.
Figure 3 is a pictorial view of a basic multi-client media presentation arrangement that includes a media server, a primary client, and a secondary client, according to an embodiment described herein.
Figure 4 is a block diagram showing internal components of the media server depicted in Figure 3, according to one embodiment described herein.
Figure 5 shows a data representation of a program clock reference (PCR) value, as is customary in the art.
Figure 6 is a packet diagram illustrating operation of a network latency calculator according to an embodiment described herein.
Figure 7 is a flow diagram showing generalized steps in a method of streaming multimedia content from a media server to different media players, according to one embodiment described herein.
Figure 8 is a graph of PTS as a function of time according to one embodiment described herein.
Figure 9 is a pictorial diagram illustrating a synchronization approach according to one embodiment described herein.
Figure 10 is a flow diagram showing a sequence of steps in an exemplary method of streaming multimedia content from a media server to different media players, according to one embodiment described herein.

### DETAILED DESCRIPTION

In the following description, certain specific details are set forth in order to provide a thorough understanding of various aspects of the disclosed subject matter. However, the disclosed subject matter may be practiced without these specific details. In some instances, well-known structures and methods comprising embodiments of the subject matter disclosed herein have not been described in detail to avoid obscuring the descriptions of other aspects of the present disclosure.

Unless the context requires otherwise, throughout the specification and claims that follow, the word "comprise" and variations thereof, such as "comprises" and "comprising" are to be construed in an open, inclusive sense, that is, as "including, but not limited to."

Reference throughout the specification to "one embodiment" or "an embodiment" means that a particular feature, structure, or characteristic described in connection with the embodiment is included in at least one embodiment. Thus, the appearance of the phrases "in one embodiment" or "in an embodiment" in various places throughout the specification are not necessarily all referring to the same aspect. Furthermore, the particular features, structures, or characteristics may be combined in any suitable manner in one or more aspects of the present disclosure.

In this specification, embodiments of the present disclosure illustrate a subscriber satellite television service as an example. This detailed description is not meant to limit the disclosure to any specific embodiment. The present disclosure is equally applicable to cable television systems, broadcast television systems, Internet streaming media systems, network file playback, local file playback, or other television or video distribution systems that include user hardware, typically in the form of a receiver or set top box that is supported by the media provider or by a third party maintenance service provider. Such hardware can also include, for example, digital video recorder (DVR) devices and/or digital-video-disc (DVD) recording devices or other accessory devices inside, or separate from, the set top box.

Throughout the specification, the term "subscriber" refers to an end user who is a customer of a media service provider and who has an account associated with the media service provider. Subscriber equipment resides at the subscriber's address. The terms "user" and "viewer" refer to anyone using part or all of the home entertainment system components described herein. The term "customer" refers to a person who places a service call.

The disclosure uses the term "signal" in various places. One skilled in the art will recognize that the signal can be any digital or analog signal. Those signals can include, but are not limited to, a bit, a specified set of bits, an A/C signal, a D/C signal, a packet, or a stream. Uses of the term "signal" in the description can include any of these different interpretations. It will also be understood to one skilled in the art that the term "connected" is not limited to a physical connection but can refer to any means of communicatively or operatively coupling two devices.

As a general matter, the disclosure uses the terms "television converter," "receiver," "set top box," "television receiving device," "television receiver," "television recording device," "satellite set top box," "satellite receiver," "cable set top box," "cable receiver," and "content receiver," to refer interchangeably to a converter device or electronic equipment that has the capacity to acquire, process and distribute one or more television signals transmitted by broadcast, cable, telephone or satellite distributors. DVR and "personal video recorder (PVR)" refer interchangeably to devices that can record and play back television signals and that can implement playback functions including, but not limited to, play, fast-forward, rewind, and pause. As set forth in this specification and the figures pertaining thereto, DVR and PVR functionality or devices can be combined with a television converter. The signals transmitted by these broadcast, cable, telephone, satellite, or other distributors can include, individually or in any combination, Internet, radio, television or telephonic data, and streaming media. One skilled in the art will recognize that a television converter device can be implemented, for example, as an external self-enclosed unit, a plurality of external self-enclosed units or as an internal unit housed within a television. One skilled in the art will further recognize that the present disclosure can apply to analog or digital satellite set top boxes.

As yet another general matter, it will be understood by one skilled in the art that the term "television" refers to a television set or video display that can contain an integrated television converter device, for example, an internal cable-ready television tuner housed inside a television or, alternatively, that is connected to an external television converter device such as an external set top box connected via cabling to a television. A further example of an external television converter device is the EchoStar Hopper combination satellite set top box and DVR.

A display may include, but is not limited to: a television display, a monitor display, an interlaced video display, a non-interlaced video display, phase alternate line (PAL) display, National Television System Committee (NTSC) systems display, a progressive scan display, a plasma display, a liquid crystal display (LCD) display, a cathode ray tube (CRT) display and various High Definition (HD) displays, an IMAX™ screen, a movie screen, a projector screen, etc.

Specific embodiments are described herein with reference to multimedia systems that have been produced; however, the present disclosure and the reference to certain materials, dimensions, and the details and ordering of processing steps are exemplary and should not be limited to those shown.

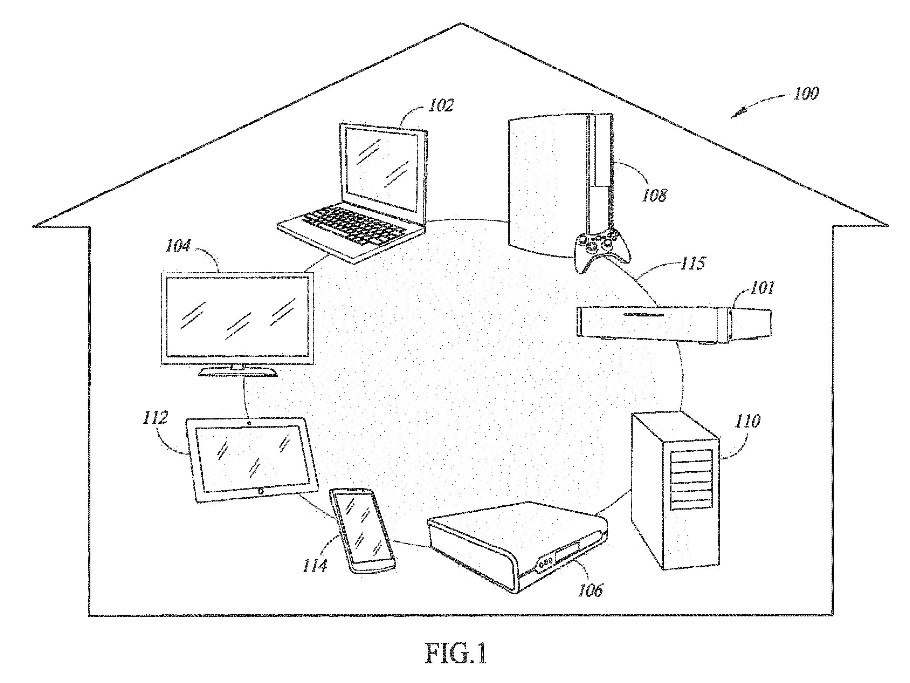

Turning now to the Figures, Figure 1 shows a group of electronic components that make up a typical home multimedia system 100 operating within the current media ecosystem, according to one embodiment. The home multimedia system 100 alternatively may be implemented in a non-home environment such as an office building, a hotel, a resort, a commercial business, an industrial setting, or any other localized environment. The exemplary home multimedia system 100 includes a media server 101 and one or more of the following exemplary components: a personal computer 102, e.g., a desktop computer or a laptop computer; a television 104 or other display device, such as a front screen or rear screen projector system; a client set top box 106; a game console 108; a networked storage device 110; a tablet computer 112; and a mobile device 114, such as, for example, a smart phone. The components 102-114 communicate with the media server 101 and with one another via a local network 115. Other embodiments of the multimedia system 100 can include more or fewer components than those shown in the Figures. The local network 115 may be a hard-wired network, a wireless network, or the local network 115 may include both wired and wireless data paths. The media server 101 represents one or more devices that receive broadband Internet signals as well as television and/or radio signals via cable or satellite, and distributes multimedia content to the other components via the local network 115. Through the broadband connection, the media server 101 may provide access to Internet streaming sources such as You-Tube™, Netflix™, and Hulu™ and so on. The media server 101 can be, for example, a simple set top box containing a system-on-chip (SOC) equipped with enhanced software to implement the features described below. Content can be stored in the networked storage device 110 for shared access at a later time among the various components. The networked storage device 110 may be a hard drive, a TiVo™ device, or other similar high-density data storage unit appropriate to store multi-media data.

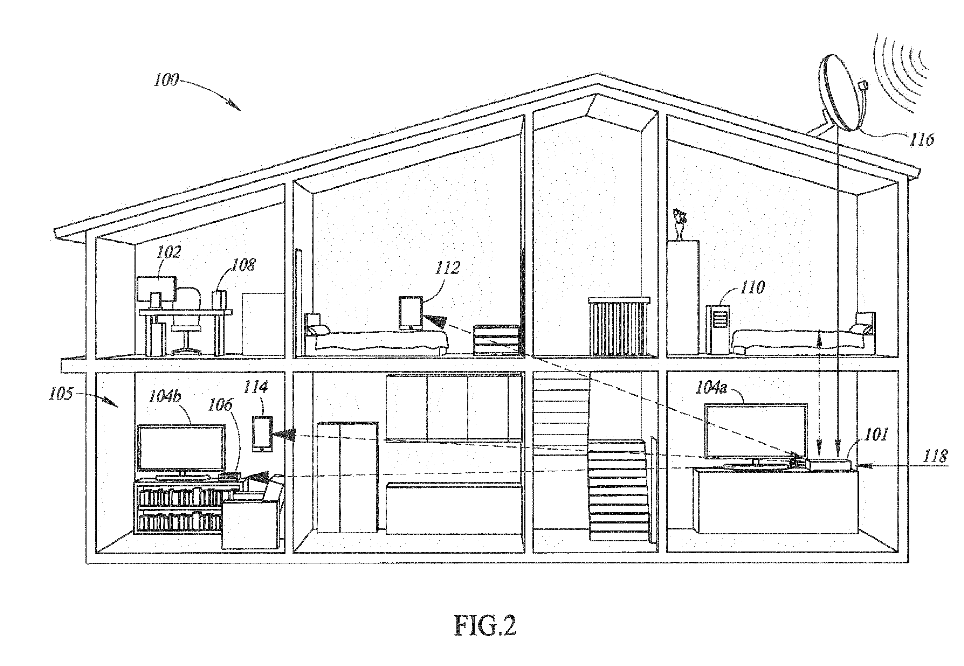

Figure 2 shows an exemplary system layout of the home multimedia system 100, according to one embodiment. A satellite dish antenna 116 is located on the roof of the home. A broadband Internet connection is provided via a telephone line or coaxial cable 118 coupled to the media server 101. A television 104a is hard-wired to the media server 101 in a common area such as a living room or family room. The media server 101 may be coupled to a wireless router, or may include an internal wireless router, to provide wireless Internet connectivity throughout the home to be received by a plurality of playback devices as well as the networked storage device 110. The client set top box 106 is located in, for example, a library/media room 105, and is hardwired to a second television display 104b. Any one of the exemplary data paths shown may be implemented as a hard-wired connection or a wireless connection.

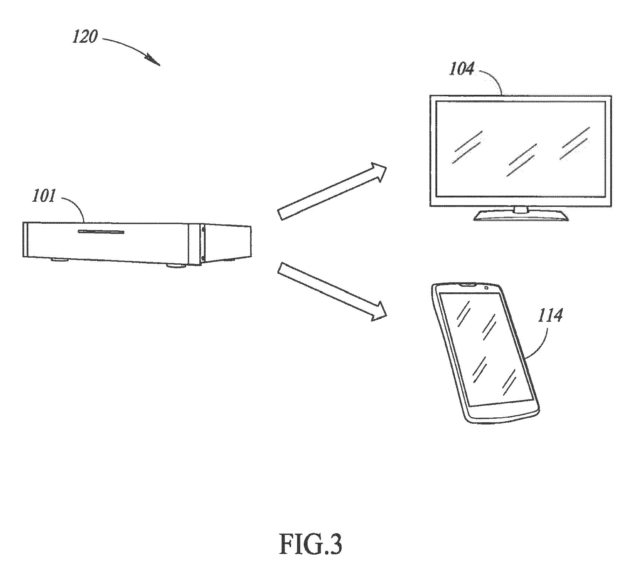

Figure 3 shows an exemplary embodiment of a basic multi-client media system 120 in which the media server 101 is communicatively coupled to a primary client, the television 104, and to a secondary client, the mobile phone 114. The media server 106 provides multimedia streams and associated information to the primary and secondary clients and monitors network and system latencies. The media server 106 also modifies the PCR, and in certain instances, generates the PCR. Each one of the client devices is a media player that provides frame rendering information and replies to queries in the form of ping packets sent out by the media server 106. The client devices also manage audio-video synchronization using the PCR supplied by the media server.

It is generally possible to configure the system layout shown in Figure 3 such that two viewers of a movie being shown on the television 104b can hear the audio in two different languages. For example, the television 104b located in the library/media room 105 may include an internal speaker system that plays audio in English for one viewer, while the other viewer tunes into a French audio track on a smart phone using headphones. Both of the audio tracks and the video can be streamed from the Internet via the media server 101. However, for various reasons, the French audio track that is played back via the mobile device 114 can fail to synchronize properly with the video playback on the television 104. A delay, or latency, may be caused by, for example, someone in the home using Skype, which is a large consumer of Wi-Fi bandwidth. Additionally or alternatively, the audio signal may be rendered on the second client using a storage buffer that causes latency with respect to video playback on the primary client. Furthermore, there may be latency and/or jitter associated with the Internet connection, or with the tendency of different clients' system clocks to drift apart from one another over time. Failure to synchronize the audio track with the video display is very annoying and confusing for the viewer, essentially ruining the viewing experience.

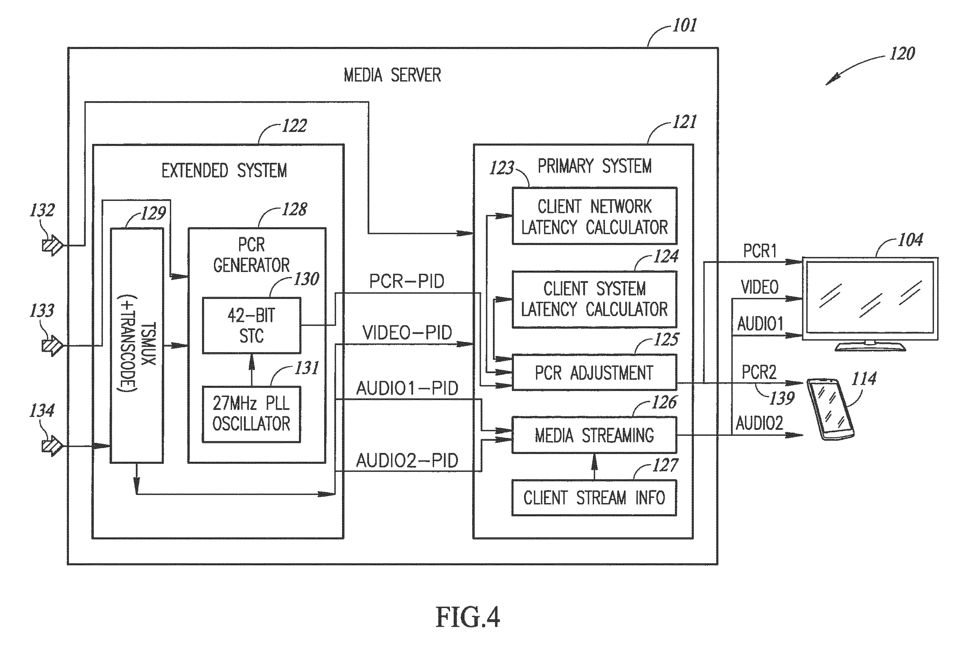

The present disclosure sets forth an approach to coordinating the synchronization of multimedia streams, using network latency information and client system latency information, determined by presentation time stamps (PTS) of the clients, to generate a modified PCR value, PCR2, from the PCR value 130. With reference to Figures 4, , 5, 6, and 7, such an approach is illustrated, according to an exemplary embodiment, by the multi-client system 120 shown in Figure 3 that includes the media server 101, a primary client device, e.g., the television 104, and a secondary client device, e.g., the mobile device 114. In other embodiments, the multi-client system 120 may include more or fewer client devices.

Figure 4 illustrates the media server 101 in the multi-client system 120 in greater detail, according to one embodiment. The media server 101, in the present example, includes a primary system 121 and an extended system 122. The primary system 121 includes a client network latency calculator 123, a client system latency calculator 124, a PCR adjustment module 125, a media streaming module 126, and a client information streaming module 127. The extended system 122 includes a PCR generator 128 and a transport stream multiplexer / transcoder unit (TS-mux) 129.

The PCR generator 128 outputs a PCR value 130 as a program clock reference-packet identifier (PCR-PID) signal to the PCR adjustment module 125. The PCR generator 128 also includes a phase locked loop (PLL) oscillator 131 that generates a 27 MHz clock signal. The PCR adjustment module 125 receives latency information from the client network latency calculator 123 and the client system latency calculator 124 and produces a modified PCR signal, PCR2, to synchronize the secondary client device, e.g., the mobile device 114, with the primary client device, e.g., the television 104. The client information streaming module 127 provides additional information and status data of the clients to the media streaming module 126.

Multimedia input signals to the media server 101 include a live media stream input 132, such as a multimedia signal from satellite and cable TV content provider services; a recorded content input 133 such as a multimedia signal from a digital video recorder (DVR) -type device with a transport stream packet output, and a playback content input 134, such as a multimedia signal from a DVD or VCR device. Each one of the multimedia input signals 132, 133, and 134 generally includes video, audio, and text information. The multimedia signals 132, 133, and 134 are split into separate audio and video streams that are supplied to the media streaming unit 126 as Video-PID, Audio1-PID, and Audio2-PID signals for streaming to different client devices e.g., the television 104 and mobile device 114.

The various types of input signals 132, 133, and 134 may be treated differently by the media server 101, as shown in Figure 4 and Table I. The media server system 101 is scalable so as to include aspects of the extended system 122 only when they are needed. For example, the live content multimedia input signal 132, categorized as Input type 1, may already be encoded in TS packets and have a PCR from the media data stream. Thus, to process the live satellite input 132, the media system 101 includes only the primary system 121 for PCR modification for the secondary client device(s). The recorded content multimedia input 133, categorized as Input type 2, is in a TS container, *e.g.* from a DVR device, and needs the extended system 122 that includes the PCR generator 128 to generate the PCR value 130, followed by PCR modification in the primary system 121 to offset latency due to buffering, clock drift, and the like. The local file playback input 134, categorized as Input type 3, may not be in a TS container, so it needs the TS-mux 129 to split video and audio streams and transcode to TS packets with separate audio-video PIDs. In addition, the PCR generator 128 is needed to generate the PCR value 130, followed by PCR modification in the primary system 121.

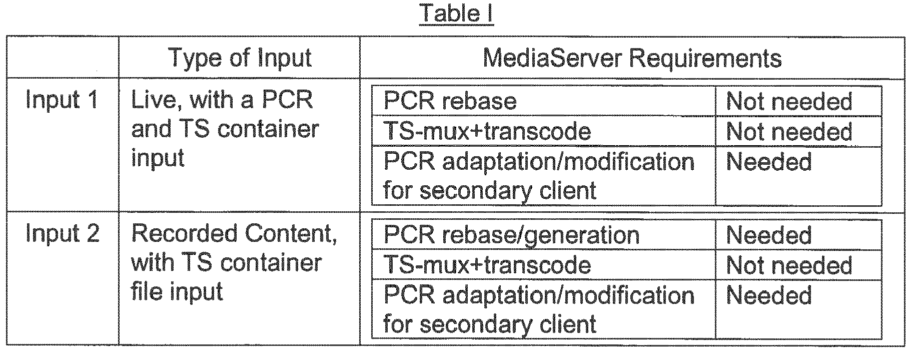

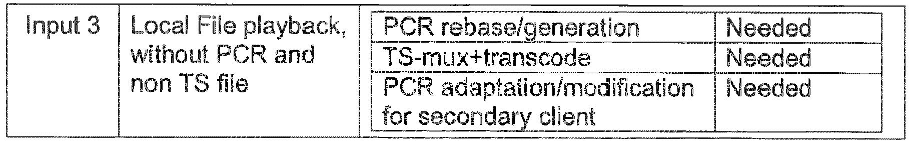

Components of the primary system 121 operate in parallel to deliver multimedia streams for synchronous rendering on the client devices. The media streaming module 126 supports media services that send a packetized elementary stream (PES) to the primary and secondary client devices, while the client system latency and client network latency calculators periodically monitor latency times associated with each connected client as described in more detail below. The PES can be formatted as MPEG-2 transport stream (TS) packets, for example, which carry 184 bytes of payload data prefixed by a four-byte header. Additional data that is not part of the media streams, such as the PCR, PTS, and the like, can be contained in the header.

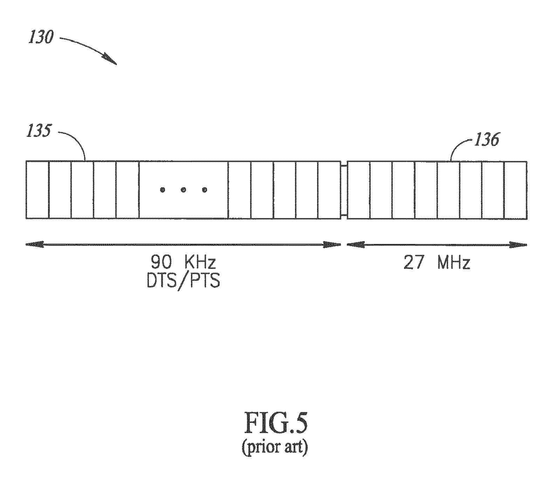

Meanwhile the PCR adjustment module 125 uses the latency time data to enable the decoder at the client device to present audio data that is synchronized with the video data. In addition to streaming the media signals to client devices, the PCR value 130 is also transmitted periodically, for example, every 100 milliseconds (ms), or, alternatively, as part of the header transmitted with each video frame, as shown in Figure 5. Each video frame corresponds to a still image to be displayed on a screen associated with the client device.

Figure 5 shows a typical PCR value 130 as a 42-bit representation of the system time clock (STC) at the encoder. The 42-bit PCR value 130 includes a 33-bit base 135, based on a 90 KHz transport stream clock, and a 9-bit extension 136 based on a 27 MHz clock. The PCR for inputs 133, 134 is derived from the 42-bit PCR value 130 by taking a presentation time stamp (PTS) and/or a decode time stamp (DTS) as a base. Sending the PCR value 130 to the decoder at the client device indicates what the STC should be set to at the decoder when the PCR is received. Thus, upon receiving the PCR value 130, the decoder in the client device first sets a local clock to match the system time clock (STC), and then decodes the video frame. According to a customary synchronization method for a sole client device, audio and video data are then presented on the sole client device using presentation time stamps that are independently synchronized to the PCR value 130. Synchronization is accomplished within a system-on-chip located within the client device. Such a method of synchronization is supported in the content receiver, e.g. a set top box (STB), by content providers.

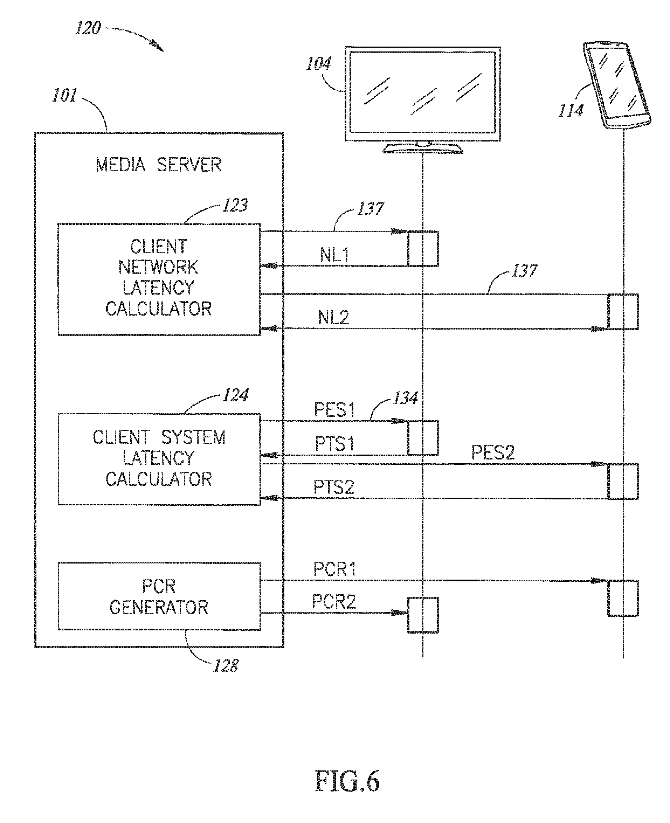

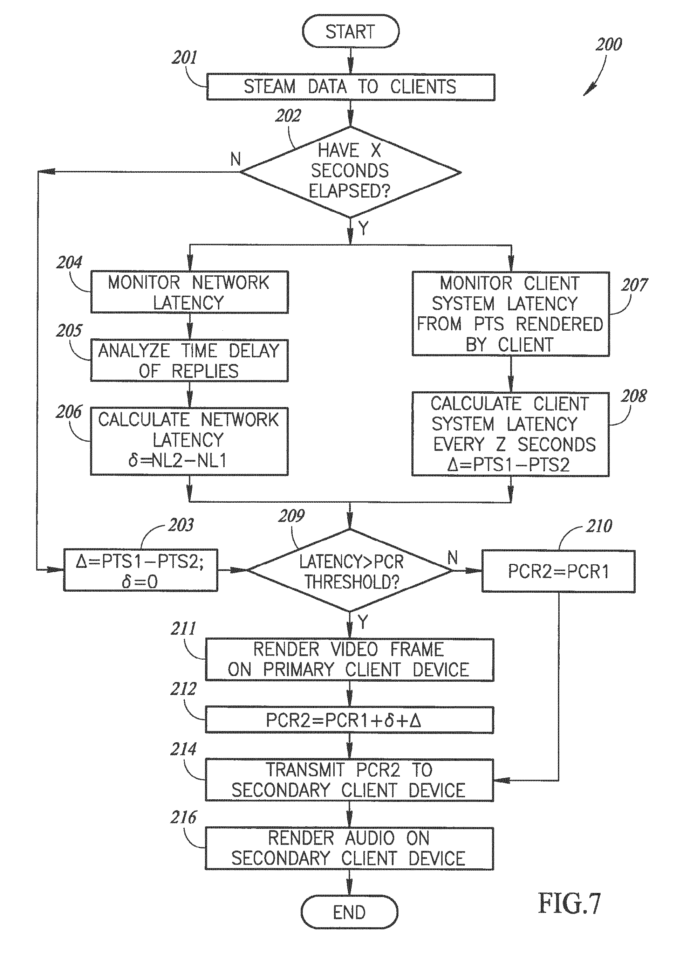

The multi-client system 120 achieves synchronization of multimedia streams using a two-step process. A first step in synchronization is illustrated in Figure 6 in which network latency is determined from measured time delays. A second step in synchronization is illustrated in Figure 6, in which client system latency is determined from presentation time stamps supplied by the client device. Both types of latency are taken into account in a two-step synchronization method 200 to generate a modified PCR2 so that the secondary client maintains synchronization with the primary client. The method 200 is shown in further detail in Figure 7.

Figure 6 shows the exemplary multi-client system 120 executing the synchronization method 200 in which network latency is continuously monitored by the media server 101 using the client network latency calculator 123. The client network latency calculator 123 can be implemented in a set of instructions that executes on a microprocessor in conjunction with electronic memory, and network signal transmission, reception, and signal processing hardware normally provided within the media server 101 that are well known in the art.

At 201, the media server streams data to clients during an initial stabilization interval of x seconds, during which network latency is not monitored. During the stabilization interval, however, the client system latency Δ is taken into account at 203 and is determined using the relationship Δ = PTS1-PTS2.

At 202, the media server determines whether or not x seconds have elapsed.

At 204, when the stabilization interval has passed, network latency monitoring begins. The media server 101 monitors network latency by sending latency monitoring signals 137, or pings, to client devices that are connected to the local network 115, and by receiving network latency replies to the latency monitoring signals. The latency monitoring signals 137 can be sent via a wired path or a wireless path, depending on the network connectivity and the configuration of each client device.

In one embodiment, a first latency monitoring signal 137 is sent to the primary client device, television 104. The television 104 replies by returning a ping reply packet to the media server 101 from which a network latency of the primary client device, NL1, can be calculated. Next, the media server sends a second latency monitoring signal 137 to the secondary client device, mobile device 114. The mobile device 114 replies to the media server 101 by sending back a ping reply packet from which a network latency of the secondary client device, NL2, can be calculated. Thus, in response to receipt of a latency monitoring signal 137, each client device returns a confirmation ping reply packet to the media server 101 that indicates a time-varying network communication delay associated with the particular client device.

At 205, the network latency calculator 123 within the media server 101 analyzes time delays of the replies received from the client devices.

At 206, the network latency calculator 123 calculates network latency δ according to the relationship δ = NL2 - NL1, wherein NL2 and NL1 are network latency times associated with the respective client devices. In one embodiment, network latency times are set to half the response time. For example, if a ping reply from client 1 takes 200 ms and a ping reply from client 2 takes 400 ms, NL1 =100 ms and NL2 = 200 ms. Thus, δ = 100 ms. Network latency is a dynamic value that changes with time for various client devices. In this way, the media server 101 continuously indirectly monitors the relative latency of the mobile client devices.

Figure 6 shows a client system latency calculator 124 and, within the media server 101, the PCR generator 128 cooperating to perform the following acts:
At 207, the client system latency calculator monitors the PTS associated with each client, in parallel with monitoring the network latency δ. The timestamp values of a rendered PES, referred to as a presentation time stamp (PTS), can be used as a client system latency monitoring signal. The media server sends transport stream (TS) packets to the primary and secondary client devices, television 104 and mobile device 114. After rendering their respective PES packets enclosed in TS packets, the client devices return timestamps PTS1 and PTS2 respectively, associated with the rendered PES's to the media server 101. For example, PTS1 for client 1 may be 30 minutes, or 1,800,000 ms, while PTS2 for client 2 may be 1,799,980 ms, lagging client 1 by 20 ms.

For inputs 133 and 134, when no PCR is present, a PCR may be generated as follows. If the primary client PTS = 3600 ms, for example, and the current 42-bit system counter is 4000 ms, successive PCR system counter values can be offset by -400 ms. Thus, after 1000 ms, PCR1 = 4000 + 1000 - 400 = 4600 ms.

At 208, following the stabilization period, client system latency Δ is re-calculated every z seconds according to the relationship Δ = PTS1 - PTS2. In the above example, Δ = 20 ms.

At 209, the media server 101 compares the latency with a PCR threshold 122.

At 210, when the latency is less than the threshold value, e.g., 10 ms, the PCR generator 138 sets the PCR value for the secondary client equal to the PCR value of the primary client, with no adjustment for latency, i.e., PCR2 = PCR1. In the above example, PCR2 = PCR1 = 1,799,870 ms.

At 211, while the network and system latencies continue to be monitored, the primary client device for displaying video, the television 104, renders a video frame in synchronization with PCR1 and sends the time stamp PTS1, associated with rendered video samples, to the media server 101.

At 212, the PCR adjustment module 125 within the media server 101 modifies the PCR value based on both the network latency δ and the client system latency Δ information, to produce PCR2 = PCR1 + δ + Δ, wherein δ = NL2- NL1 represents the network latency. In the above example, wherein the network latency δ = 100 ms and the client system latency Δ = 20 ms, PCR2 = 1,799,870 + 100 + 20 = 1,799,990 ms.

At 214, the media server 101 sends the modified PCR value, PCR2, to the secondary client, mobile device 114.

At 216, the mobile device 114 then renders the audio data synchronized with PCR2 and thus PCR1 and the associated video stream being shown on the television 104.

By executing the method 200, an intra-system synchronization is performed across all three devices, the media server 101, and the client device(s), as opposed to a separate synchronization being executed within each client device. This allows the same program to be played in full or split and played back in parts on multiple devices while maintaining synchronization between the audio and the video data among the different devices.

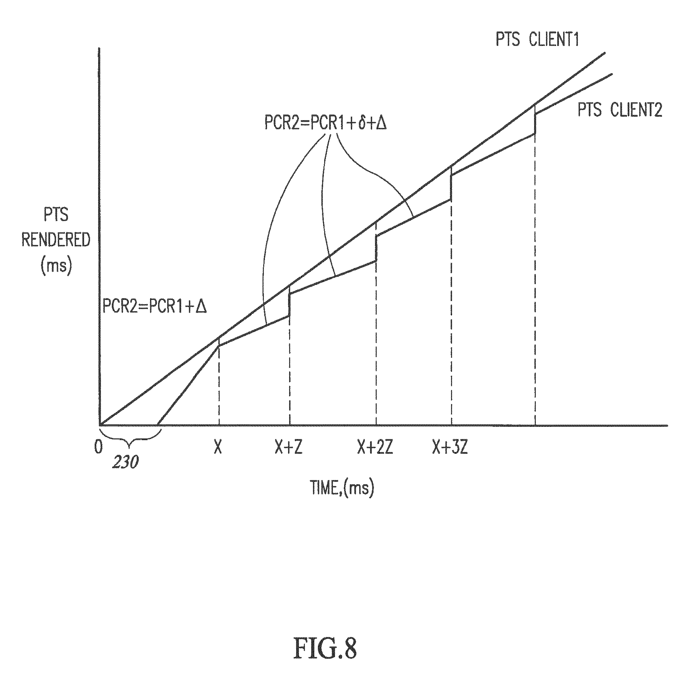

Figure 8 illustrates the tendency of a presentation split between two client devices to drift out of synchronization due to latency, and the effect of the method 200 in restoring synchronization. Figure 8 plots the PTS for client 1 and the PTS for client 2 relative to that of client 1, as a function of time. At the start of execution of the method 200, there exists a PTS differential 230 between the two clients due to network latency and buffering. During the first x seconds, the PTS of client 2 is adjusted relative to that of client 1, to correct the drift that has occurred due to client system latency, however, the network latency is not yet accounted for. Thereafter, during every interval of z seconds, the PTS of client 2 is adjusted to correct the drift that occurs due to both network latency δ, calculated continuously, and client system latency Δ, re-calculated every z seconds. Thus, the adjusted PTS introduces a periodic correction that prevents divergence of the timing of the two presentations. It is clear from the two plots shown in Figure 8 that without such a correction, latencies would accumulate and cause the presentation on client 2 to noticeably lag the presentation on client 1.

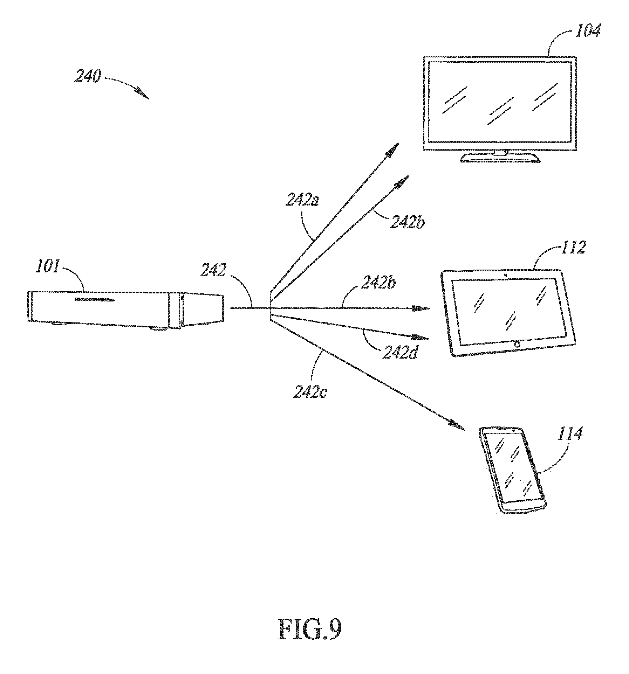

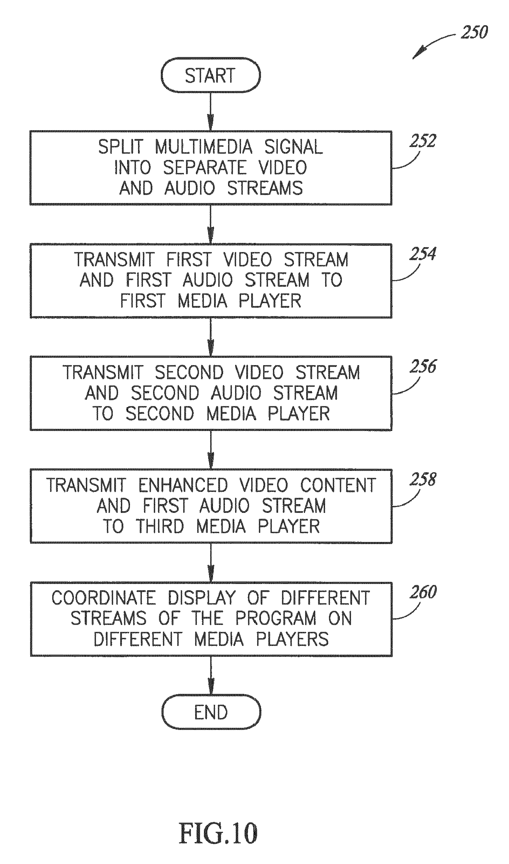

With reference to Figures 9 and 10, using the synchronization approach described above allows the media server 101 to execute a method 250 to stream synchronized content to various different client devices. Figure 9 shows a multi-client system 240 having three client devices, a television 104, a tablet computer 112, and a mobile device 114. The multi-client system 240 carries out the method 250 shown in Figure 10, as follows:
At 252, the media server 101 splits a multimedia signal 242 into separate video and audio streams. Splitting the multimedia signal 242 may include demodulating and decoding the multimedia signal 242. Splitting the multimedia signal 242 may further include transcoding video streams derived from the multimedia signal 242 to provide video signals having different resolutions. Splitting the multimedia signal 242 may further include generating multiple audio streams that provide foreign language translations of an audio portion of the multimedia signal 242.

At 254, the media server 101 transmits to a primary client, e.g., the client set top box 106, a video stream 242a and an English language audio stream 242b to be displayed concurrently on the television 104.

Meanwhile, at 256, the media server 101 splits out and transmits only a French language audio stream 242c for presentation on a secondary client, e.g., the mobile device 114.

At 258, a pair of signals may be split from the multimedia signal 242 for transmission to another secondary client, e.g., the tablet computer 112. In one embodiment, one of the signals contains enhanced video content relating to the same program, such as an additional description of the event. For example, one signal may contain an enhanced video content stream 242a', which is the video stream 242a augmented with enhanced graphics or images related to video 242a. Meanwhile, the other signal contains the English audio stream 242b. Using the synchronization method 200, the enhanced video content stream 242a' can be presented on the tablet computer in synchrony with the English audio stream 242b.

At 260, the media server 101 coordinates synchronized display of the different streams on different media players using the synchronization approach shown in Figures 6-7 above. This approach can be used to enhance the viewer's experience in many different ways. In one embodiment, the current program event is a football game, wherein the game content may be displayed on the television 104, while enhanced video content e.g., in the form of football play annotations, is superimposed onto the video of the game for display on the tablet computer 112. In one embodiment, the current program event is a documentary, wherein enhanced video content in the form of explanatory historical notes or maps, and the like, are displayed on the tablet computer 112. In one embodiment, the current program event is an interactive game, wherein the game graphics are displayed on the television 104, while the game sound is split off and sent to the mobile device 114.

The various embodiments described above can be combined to provide further embodiments. All of the U.S. patents, U.S. patent application publications, U.S. patent applications, foreign patents, foreign patent applications and non-patent publications referred to in this specification and/or listed in the Application Data Sheet are incorporated herein by reference, in their entirety. Aspects of the embodiments can be modified, if necessary to employ concepts of the various patents, applications and publications to provide yet further embodiments.

It will be appreciated that, although specific embodiments of the present disclosure are described herein for purposes of illustration, various modifications may be made without departing from the spirit and scope of the present disclosure. Accordingly, the present disclosure is not limited except as by the appended claims.

These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

## Claims

1. A multimedia system, comprising:
a media server communicatively coupled to a network and to a plurality of client media players, the media server configured to demodulate and decode multimedia signals received via the network, for output to the plurality of client media players;
a primary media player configured to receive from the media server a program including video data for rendering on a display device and a set of audio data for rendering to a first speaker;
a secondary media player configured to receive from the media server a set of audio data for rendering to a second speaker; and
a memory storing instructions that, when executed by a microprocessor, cause the media server to
split a multimedia signal associated with the program into separate video and audio streams;
transmit a video stream and an audio stream to the primary media player;
transmit an audio stream to the secondary media player; coordinate substantially simultaneous display of the video and audio streams associated with a same program on the different media players; and
coordinate substantially simultaneous display different sets of audio data associated with the same program on the first and second speakers.

2. The system of claim 1 wherein the client media players include one or more of a television, a game console, a DVR, a computer, a laptop, a tablet, or a smart phone.

3. The system of claim 1 wherein the media server is an enhanced broadcast media set top box.

4. The system of claim 1 wherein the secondary media player is further configured to receive a video stream for rendering on a second display, and the instructions further cause the media server to synchronize rendering of the video stream on the second display with a program clock signal.

5. The system of claim 4 wherein one of the audio streams is a translation of another audio stream into a different language.

6. The system of claim 5 wherein a video stream is augmented with one or more of explanatory text, subtitles, annotations, graphics, and superimposed images.

7. The system of claim 1 wherein the media server includes a primary system configured to perform latency adjustments, by determining network and client system latencies after passage of a stabilization time interval.

8. The system of claim 7 wherein the media server further includes an extended system configured with a program clock reference generator configured to calculate a modified program clock reference value from an original program clock reference value based on the latencies, when the latencies exceed a threshold latency value, and a transport stream multiplexer configured to transmit the modified program clock reference value to the secondary client device.

9. The system of claim 8 wherein the modified program clock reference value is set to the sum of the network latency, the client system latency, and the original program clock reference value.

10. A method of streaming multimedia content from a media server to different media players, the method comprising:
receiving, via a network, multimedia signals associated with a single multimedia program;
splitting the multimedia signals into separate video and audio streams;
transmitting a video stream and an audio stream to a primary media player having a display and a speaker;
transmitting an audio stream to a secondary media player having a display
and a speaker; and
coordinating substantially simultaneous display of different audio streams associated with the single multimedia program on the different media players using a digital program clock as a common reference.

11. The method of claim 10, further comprising transmitting a video stream to the secondary media player and synchronizing rendering of the video stream to the rendering of another video stream using a digital program clock as a common reference.

12. The method of claim 10 wherein rendering the audio stream by the secondary media player provides, via the second speaker, a soundtrack of the program in a language different from that rendered on the primary media player.

13. The method of claim 11 wherein the splitting includes demodulating and encoding the media signals, and the decoding includes transcoding to provide video streams at different resolutions.

14. The method as claimed in claim 10, wherein coordinating substantially simultaneous display of different audio streams associated with the single multimedia program on the different media players using a digital program clock as a common reference comprises:
determining a network latency for primary and secondary media players networked to the media server;
determining a client system latency based on presentation time stamps associated with rendering video frames on the primary and secondary media players;
adjusting the program clock reference value for the secondary media player to account for the network latency and the client system latency; and
transmitting the adjusted program clock reference value to a secondary media player to synchronize data presentation with that of the primary media player.

15. The method of claim 14, further comprising, upon rendering the video and audio streams at the different primary and secondary media players, receiving from each primary and secondary media player a presentation time stamp.
